(19) Europäisches Patentamt
European Patent Office
Office européen des brevets

(11) Numéro de publication: **0 293 298 B1**

(12) # FASCICULE DE BREVET EUROPEEN

(45) Date de publication du fascicule du brevet: **11.07.90**

(51) Int. Cl.⁵: **B01J 20/32,** B01J 20/02, B01J 20/34, B01D 53/34

(21) Numéro de dépôt: **88401278.2**

(22) Date de dépôt: **25.05.88**

(54) **Procédés de préparation et de régénération d'une masse solide de captation du mercure renfermant du cuivre.**

(30) Priorité: **26.05.87 FR 8707442**
**26.05.87 FR 8707443**

(43) Date de publication de la demande:
**30.11.88 Bulletin 88/48**

(45) Mention de la délivrance du brevet:
**11.07.90 Bulletin 90/28**

(84) Etats contractants désignés:
**DE ES GB IT NL**

(56) Documents cités:
**FR-A-2 121 854**
**US-A-3 408 291**
**US-A-4 094 777**
**US-A-4 361 493**
**US-A-4 474 896**

**CHEMICAL ABSTRACTS,**
**vol. 81, no. 20, 18 novembre 1974, résumé no 126575g, Columbus, Ohio, US; & JP-A-74 44 991 (OSAKA SODA CO., LTD) 27-04-1974**

(73) Titulaire: **INSTITUT FRANCAIS DU PETROLE, 4, Avenue de Bois-Préau, F-92502 Rueil-Malmaison(FR)**

(72) Inventeur: **Toulhoat, Hervé, 51, avenue Charles Tellier, F-78800 Houilles(FR)**
Inventeur: **Roussel, Michel, 45, avenue Guillebaud, F-92160 Antony(FR)**
Inventeur: **Varin, Philippe, 6, rue de la Saussaye, F-91300 Massy(FR)**

**EP 0 293 298 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'une masse solide de captation du mercure contenant un support minéral et du cuivre au moins en partie à l'état de sulfure, ainsi qu'un procédé de régénération de cette masse solide.

La présente invention a également pour objet un procédé de préparation d'un précurseur d'une masse solide de captation du mercure.

Les masses solides préparées selon la présente invention peuvent être dénommées indifféremment masses d'absorption, de captation, d'extraction ou de piégeage.

Le brevet US-A-4094777 décrit un procédé de préparation de masse de captation du mercure comprenant l'incorporation d'un composé du cuivre à un support minéral, suivie d'une sulfuration à une température inférieure à 300°C.

La sulfuration selon le procédé décrit dans ce brevet est effectuée à l'aide d'un agent gazeux, par exemple le sulfure d'hydrogène, ou d'une solution d'un sulfure minéral dans l'eau ou dans un solvant organique, par exemple une solution aqueuse de sulfure de sodium, de sulfure de potassium ou de sulfure d'ammonium.

Les masses obtenues présentent une activité élevée et sont relativement peu coûteuses. Cependant la préparation de ces masses de captation présente plusieurs inconvénients importants .

Ainsi, lorsque la sulfuration est effectuée à l'aide de sulfure d'hydrogène ($H_2S$) gazeux, l'obtention d'une masse de captation ayant une activité suffisante nécessite usuellement de travailler à des températures relativement élevées, par exemple supérieures à 200°C, ce qui est très pénalisant. De plus $H_2S$ est un produit toxique et malodorant.

L'utilisation de solutions de sulfure, par exemple de solutions aqueuses de sulfure d'ammonium, permet de travailler à une température relativement basse, par exemple entre zéro et cent degrés Celsius. Cependant, le sulfure d'ammonium est un composé toxique et facilement décomposable, ce qui complique son utilisation.

L'efficacité de captation du mercure des masses obtenues par ce procédé diminue au cours du temps et leur durée de vie est limitée.

Il a été découvert de façon surprenante que l'on peut obtenir une masse solide de captation du mercure ayant une bonne efficacité et une durée de vie améliorée en utilisant comme agent de sulfuration un polysulfure organique de formule générale $R\text{-}S_{(n)}\text{-}R'$ où R,R' et n sont définis ci-après.

Ledit agent de sulfuration incorporé au moins partiellement au support minéral, de préférence au moins en partie dans sa porosité, permet d'obtenir un précurseur d'une masse solide de captation du mercure. Ledit précurseur est ensuite traité en atmosphère non oxydante, par exemple neutre ou réductrice, et de préférence neutre, habituellement sous balayage de gaz, à une température et pendant un temps suffisants pour permettre la formation de sulfure de cuivre et éventuellement de sulfure des autres métaux présents lorsque le support minéral en contient.

Le procédé de préparation de la masse solide de captation du mercure selon la présente invention, outre l'obtention d'une masse solide ayant une meilleure tenue dans le temps, présente également les principaux avantages suivants :

- possibilité d'incorporer l'agent de sulfuration à une température relativement basse, habituellement inférieure à 100°C,
- possibilité de transformer le précurseur de la masse de captation du mercure résultant de l'incorporation du polysulfure organique, en une masse de captation active, à une température relativement basse habituellement inférieure à 250°C,
- utilisation d'un agent de sulfuration non toxique et n'ayant aucune mauvaise odeur.

De façon plus précise, le procédé de préparation, d'une masse solide de captation du mercure de la présente invention comprend les étapes suivantes :

a/ on incorpore au moins un composé de cuivre, autre qu'un sulfure, à un support ou dispersant minéral solide,

b/ on calcine éventuellement, le produit obtenu à l'étape (a) de manière à transformer au moins en partie le ou les composés de cuivre qu'il contient en oxyde de cuivre (CuO),

c/ on incorpore, au moins partiellement, au moins un polysulfure organique de formule R-S(n)-R' au produit résultant de l'étape (b) ou au produit résultant de l'étape (a), et

d/ on soumet le précurseur issu de l'étape (c) à un traitement thermique en atmosphère non oxydante, sous balayage de gaz, à une température et pendant un temps suffisants pour permettre la formation de sulfure du ou des métaux présents.

Les supports ou dispersants minéraux solides sont habituellement choisis dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires tels que par exemple l'alumine, l'oxyde de titane, la zircone, la magnésie, les silices-alumines, les silices-magnésies et les silices-zircones, les mélanges alumines-oxyde de bore, les

aluminates, les silico-aluminates, les alumino-silicates zéolithiques cristallins, synthétiques ou naturels, par exemple les mordénites, les faujasites, les offrétites, les érionites, les ferriérites, les zéolithes ZSM5 et ZSM11, les mazzites, et les ciments tels que par exemple ceux de type Secar produits par la société Lafarge.

On utilise de préférence un support choisi dans le groupe formé par le charbon, le charbon actif, le coke, la silice, les alumines, les silices-alumines, les silicates, les aluminates et les silico-aluminates.

De façon avantageuse le support est choisi dans le groupe formé par la silice, les alumines, les silices-alumines, les silicates, les aluminates et les silico-aluminates et on utilise très avantageusement l'alumine.

Lorsque les masses de captation du mercure sont destinées à être utilisées dans le traitement de charges contenant des hydrocarbures condensables (par exemple $C_4$ ou supérieur à $C_4$) à une température située dans la gamme de température à laquelle s'effectue la captation, on a constaté que les masses ayant un diamètre moyen de pores au moins égal à 100 Angströms ($10^{-8}$m) présentent une stabilité accrue.

Les conditions d'obtention de masses (ou de supports destinés à fabriquer ces masses) présentant un diamètre moyen de pores d'au moins 100 Angströms ($10^{-8}$m) sont suffisamment bien connus de l'homme du métier pour ne pas être répétées ici, dans le cadre de la présente invention (voir par exemple US-A-4094777).

Les supports préférés ont habituellement une surface spécifique d'environ 20 à 300 $m^2 \times g^{-1}$, ces valeurs n'étant pas limitatives.

L'incorporation d'un composé de cuivre, autre qu'un sulfure, à un support ou dispersant minéral solide, peut être effectuée par toutes méthodes connues de l'homme du métier, par exemple par mélange avec un composé de cuivre ou par imprégnation à l'aide d'une solution d'un composé de cuivre. Les composés de cuivre que l'on emploie habituellement sont des composés facilement transformables en oxyde de cuivre à des températures relativement basses.

Comme exemple de composé de cuivre on peut citer à titre non limitatif : les oxydes de cuivre ; l'hydroxyde de cuivre $Cu(OH)_2$; les sels basiques de cuivre, en particulier les carbonates de formules $CuCO_3$, $Cu(OH)_2$ et $2CuCO_3$, $Cu(OH)_2$; les sels et les complexes organiques du cuivre tels que les sels des acides carboxyliques, par exemple les formiates, les acétates, les tartrates, les citrates, les benzoates, les oxalates, les malonates, les succinates, les glycolates, les lactates et l'acetylacetonate; et le nitrate de cuivre.

On préfère habituellement introduire le composé de cuivre par imprégnation du support à l'aide d'une solution aqueuse ou organique d'un composé de cuivre et de préférence à l'aide d'une solution aqueuse d'un composé de cuivre. On utilise avantageusement une solution aqueuse de nitrate de cuivre.

On peut éventuellement introduire sur le support une faible proportion d'un composé soluble d'argent. La quantité d'argent introduite sur le support exprimée en poids d'argent par rapport au support représente habituellement de 0 à 5% en poids. D'autres métaux peuvent également être éventuellement présents, par exemple le fer, le plomb.

Le support ou dispersant minéral solide comprenant un composé de cuivre, autre qu'un sulfure, est ensuite éventuellement calciné de manière à transformer, au moins en partie, le composé de cuivre en oxyde de cuivre. Lorsque dans l'étape (a) d'introduction d'un composé de cuivre, on a mélangé par exemple un oxyde de cuivre au support ou dispersant minéral solide, cette étape de calcination peut ne pas être nécessaire.

Au cours de cette étape de calcination, les conditions opératoires sont de préférence choisies de manière à transformer au moins en majeure partie, c'est-à-dire au moins 50%, et de préférence au moins 80% et très avantageusement 100% du composé de cuivre présent en oxyde de cuivre (CuO). La calcination peut être effectuée en atmosphère neutre ou oxydante. On peut ainsi opérer en présence d'un gaz inerte tel que l'azote, l'argon, l'hélium ou un mélange de ces gaz. On peut également opérer en présence d'un mélange d'oxygène et de gaz inerte contenant par exemple de 1 à 60% en poids d'oxygène ou même en présence d'oxygène sensiblement pur.

La calcination est de préférence effectuée en atmosphère oxydante et on utilise avantageusement de l'air, mais il est également possible d'employer de l'air enrichi en oxygène.

La température de calcination est habituellement d'environ 200 à environ 1000°C et de préférence d'environ 300 à environ 800°C et avantageusement d'environ 350 à environ 600°C.

La calcination peut être effectuée en atmosphère statique ou sous courant de gaz. On préfère habituellement opérer sous courant de gaz, et on emploie avantageusement un courant d'air. La vitesse spatiale horaire (V.V.H.) exprimée en volume de gaz par volume de masse de captation et par heure est habituellement d'environ 0 à environ 20000 $h^{-1}$ et de préférence d'environ 100 à 10000 $h^{-1}$ et souvent d'environ 300 à 5000 $h^{-1}$.

La durée de cette étape de calcination est habituellement d'environ 0,5 heure à environ 24 heures et de préférence d'environ 0,5 heure à environ 12 heures et avantageusement d'environ 1 heure à environ 10 heures.

Le produit contenant habituellement de l'oxyde de cuivre provenant de l'étape (a) ou de l'étape (b) de calcination est ensuite mis en présence d'au moins un polysulfure organique de manière à incorporer, au moins partiellement, ce composé ou agent de sulfuration au support ou dispersant minéral solide, le produit résultant de cette incorporation (étape (c)) constituant le précurseur de la masse de captation du mercure de la présente invention.

L'agent de sulfuration employé dans le procédé de la présente invention est un polysulfure organique de formule générale $R-S_{(n)}-R'$ dans laquelle n représente un nombre entier de 2 à 20, de préférence de 3 à 20 et souvent de 3 à 8 et plus particulièrement de 4 à 7; R et R' représentent chacun un radical organique identique ou différent renfermant de 1 à 150 atomes de carbone, de préférence de 10 à 60 atomes de carbone, soit encore de 5 à 40 atomes de carbones et plus particulièrement de 7 à 16 atomes de carbone, ces radicaux étant habituellement choisis dans le groupe constitué par les radicaux alkyles saturés ou insaturés, linéaires ou ramifiés ou de type naphténique, les radicaux aryles, les radicaux alkylaryles et les radicaux arylalkyles, ces divers radicaux pouvant comporter au moins un hétéro-atome ; R éventuellement peut également être un atome d'hydrogène.

L'incorporation du polysulfure organique est habituellement effectuée à une température inférieure à environ 100°C, usuellement d'environ 0 à 50°C et de préférence d'environ 10 à 35°C et par exemple à la température ambiante (usuellement aux environs de 20°C ou 15°C à 25°C). Le polysulfure est habituellement utilisé en solution dans un solvant organique adéquat, qui dépend notamment de sa nature. Ce solvant peut être un éther, un ester, une cétone, un hydrocarbure ou un mélange de deux ou plusieurs de ces composés.

On utilise habituellement un hydrocarbure ou un mélange d'hydrocarbures. On peut citer à tire d'exemple :
- une essence légère bouillant par exemple entre environ 60 et 95°C,
- une essence de type hexane bouillant entre 63 et 68°C environ,
- une essence de type F bouillant entre environ 100 et 160°C et, contenant habituellement 10 à 20% d'hydrocarbures aromatiques, par exemple 15%, en volume,
- une essence de type "white spirit" bouillant entre environ 150 et 250°C et refermant habituellement 14 à 22% d'hydrocarbures aromatiques, par exemple 17%, en volume,
- ou toute coupe hydrocarbonée ou non, équivalente aux essences précédentes.

On peut citer, à titre d'exemple préféré de polysulfure organique, le ditertiododécylpolysulfure (n=5) où R et R' sont chacun un radical dodécyle.

Ce produit est commercialisé par exemple par la société Elf Aquitaine sous le nom TPS 32, notamment parce qu'il contient 32% poids environ de soufre.

On peut citer également le ditertiononylpolysulfure (n=5) où R et R' sont chacun un radical nonyle.

Ce produit est commercialisé par la société Elf Aquitaine sous le nom TPS 37, notamment parce qu'il contient 37% poids environ de soufre ou par la société PENWALT sous le nom de TNPS.

Pour des raisons de procédure, on peut évidemment utiliser ces agents de sulfuration du type polysulfure organique seuls ou en mélange entre eux dans des proportions judicieusement choisies.

La quantité de polysulfure que l'on incorpore à la masse d'absorption est convenablement choisie pour permettre ultérieurement la transformation des composés de cuivre contenus dans ladite masse au moins en partie en sulfure de cuivre. La quantité de polysulfure peut facilement être ajustée en fonction de la quantité de sulfure de cuivre que l'on désire obtenir.

Il est habituellement souhaitable de transformer la totalité des composés de cuivre présents dans la masse d'absorption en sulfure de cuivre et donc d'employer une quantité de polysulfure calculée en atomes de soufre, environ stoechiométrique, par rapport au cuivre, ou à l'ensemble cuivre et autres métaux présents, notamment argent, calculés en atomes de métal.

La quantité de polysulfure organique employée, calculée en atomes de soufre, est avantageusement telle que le rapport atomique soufre sur métaux présents dans la masse, soit d'environ 0,7:1 à 1,2:1 et de préférence d'environ 0,8:1 à 1,1:1.

Le précurseur résultant de l'étape (c) d'incorporation d'un agent de sulfuration au support ou dispersant minéral solide est alors soumis à un traitement thermique en atmosphère non oxydante, par exemple neutre ou réductrice et de préférence neutre, sous balayage de gaz, à une température et pendant un temps suffisants pour permettre la formation de sulfure du ou des métaux présents.

Ce traitement thermique est habituellement effectué sous courant de gaz inerte, par exemple d'azote, d'argon, d'hélium, de vapeur d'eau ou un mélange de deux ou plusieurs de ces gaz.

Dans une forme préférée de réalisation de ce traitement thermique sous balayage de gaz, on utilise un gaz contenant de la vapeur d'eau et au moins un autre gaz inerte tel que l'azote, l'argon et l'hélium. La quantité de vapeur d'eau dans le mélange de gaz représente alors avantageusement au moins 50% en poids par rapport au poids du mélange. Il est souvent préférable d'employer de la vapeur d'eau seule, non diluée par un autre gaz inerte.

Ainsi, dans une forme avantageuse de réalisation de ce traitement, la masse d'absorption contenant le polysulfure organique est traitée sous un courant de gaz contenant de préférence de la vapeur d'eau, à une température d'environ 100 à environ 250°C, de préférence environ 110 à 180°C et souvent d'environ 120 à 150°C, avec une vitesse spatiale horaire (V.V.H.) exprimée en volume de gaz par volume de masse de captation et par heure d'environ 100 à 10000 $h^{-1}$, de préférence d'environ 300 à 5000 $h^{-1}$ et souvent d'environ 500 à 2000 $h^{-1}$. La durée de ce traitement sous balayage de gaz est habituellement d'environ 1/2 heure à environ 24 heures et de préférence d'environ 1/2 heure à environ 10 heures, une durée d'environ 2 heures étant habituellement suffisante.

Une autre forme avantageuse de ce traitement thermique consiste à effectuer une première partie de cette étape sous un courant de gaz inerte ne contenant sensiblement pas de vapeur d'eau (par exemple moins de 5% en poids et de préférence moins de 1% en poids) habituellement choisi dans le groupe formé par l'azote, l'argon, l'hélium et un mélange de deux ou plusieurs de ces gaz, à une température et pendant une durée choisies dans les gammes données ci-avant, puis à effectuer dans une deuxième partie de cette étape un traitement en présence d'un gaz inerte contenant de la vapeur d'eau (habituellement au moins 25% en poids et de préférence au moins 50% en poids et parfois avantageusement 100% en poids) dans les conditions mentionnées ci-avant.

Après le traitement thermique (étape d) sous balayage de gaz, la masse d'absorption peut éventuellement être séchée, de préférence sous courant de gaz inerte, par exemple sous courant d'azote, d'hélium, d'argon ou d'un mélange de deux ou plusieurs de ces gaz, puis éventuellement refroidie jusqu'à la température ambiante de préférence en présence du courant de gaz précité, avant d'être mise en contact avec le fluide à purifier.

Le poids de sulfure de cuivre, exprimé en cuivre, contenu dans la masse est habituellement d'environ 2 à 65%, de préférence d'environ 5 à 50% du poids de la masse; dans une forme souvent avantageuse on utilise des masses contenant une quantité de sulfure de cuivre, exprimée en cuivre, représentant environ 10 à 50% du poids de la masse et parfois environ 20 à 50% de ce poids. On préfère habituellement les masses dont au moins 30% et de préférence au moins 80% du cuivre est à l'état de sulfure.

Les masses de captation du mercure obtenues par le procédé de la présente invention peuvent être utilisées pour purifier des gaz ou des liquides contenant du mercure. Ces masses solides sont habituellement utilisées sous forme de lit fixe à travers lequel on fait passer le fluide à purifier.

Le domaine de température où les masses de captation sont efficaces est habituellement compris entre environ moins 50°C et plus 200°C. Dans le cas de la démercurisation de l'air il est cependant préférable de travailler à une température inférieure à environ 100°C. Le captation du mercure peut être réalisée à pression atmosphérique ou sous une pression plus basse ou plus élevée, la pression totale pouvant atteindre par exemple 20 MPa. La V.V.H. pour des charges gazeuses (volume de charge par volume de masse de captation et par heure) est habituellement d'environ 500 à 5000 $h^{-1}$, mais on opère de préférence à une V.V.H. d'environ 2000 à 20000 $h^{-1}$ et avantageusementd'environ 4000 à 20000 $h^{-1}$; pour des charges liquides la V.V.H. sera de préférence d'environ 0,1 à 50 $h^{-1}$.

Les fluides traités peuvent renfermer par exemple de 10 nanogrammes à 2 grammes de mercure ou plus, par mètre cube. Les gaz traités sont le plus souvent des hydrocarbures ou des mélanges d'hydrocarbures tels par exemple les gaz naturels renfermant une proportion majeure de méthane et une proportion mineure d'hydrocarbures en $C_2$ et/ou supérieurs et de mercure .

Le gaz traité peut également être de l'hydrogène, comme par exemple de l'hydrogène électrolytique; ce peut également être de l'air à condition d'opérer dans des conditions de température et/ou de pression telles que le contact avec ce gaz ne provoque pas l'oxydation de la masse d'absorption ou d'une partie excessive de ladite masse. Il est également possible d'envisager le traitement de mélanges contenant plusieurs des composés ou gaz mentionnés ci-avant.

Les liquides traités sont le plus souvent des mélanges d'hydrocarbures contenant habituellement une proportion majeure d'hydrocarbures saturés ayant de 5 à 10 atomes de carbone dans leur molécule et une proportion mineure d'hydrocarbures plus lourds, ayant plus de 10 atomes de carbone dans leur molécule, et de mercure.

Tous les dispositifs connus de l'homme du métier et couramment utilisés pour la purification de fluide peuvent être employés. Le dispositif d'élimination du mercure peut par exemple être constitué d'un seul réacteur ou d'au moins deux réacteurs en parallèle mais on utilisera de préférence au moins deux réacteurs en série.

Si l'on considère le cas de trois réacteurs en série A,B,C, on opère de préférence comme suit : lorsque le premier réacteur A aura atteint une efficacité de captation qui ne sera plus que par exemple 90% ou 70% de son efficacité initiale, on procédera à la régénération ou au remplacement de la masse de captation contenue dans A. Pendant le temps nécessaire à cette étape de régénération ou de remplacement, le fluide passera dans les réacteurs B et C; après la régénération ou le remplacement de A, le fluide passera dans B et C puis dans A; B sera ensuite régénéré ou remplacé lorsque son efficacité n'est plus que de par exemple 90% ou 70% de son efficacité initiale, pendant ce temps le fluide passera sur C et A. Après la régénération ou le remplacement de B le fluide passe dans C, A puis B. On régénérera ou on remplacera ensuite C et ainsi de suite.

La présente invention concerne également un procédé de régénération d'une masse solide d'absorption de mercure contenant un support minéral et du cuivre au moins en partie à l'état de sulfure.

La présente invention concerne plus particulèrement un procédé de régénération des masses solides d'absorption du mercure utilisées pour l'élimination du mercure présent dans un fluide (gaz ou liquide).

Les masses d'absorption auxquelles s'applique le procédé de régénération de la présente invention sont par exemple préparées selon le procédé décrit précédemment ou par toute autre méthode connue de l'homme de l'art.

Il est connu d'après le document US-A-4094777 un procédé de régénération des masses solides d'absorption du mercure consistant à chauffer une masse d'absorption dont l'efficacité n'est plus, par exemple, que de 70% de son efficacité initiale, avec balayage par un gaz oxydant, neutre ou réducteur, par

exemple avec balayage d'air, de méthane ou d'hydrogène, de préférence pendant 0,1 à 48 heures à une température de 200 à 500°C. Le chauffage est, si nécessaire, suivi d'une resulfuration de la masse obtenue, à l'aide d'un agent gazeux de sulfuration tel que le sulfure d'hydrogène ou à l'aide d'une solution d'un sulfure dans l'eau ou dans un solvant organique, par exemple une solution aqueuse de sulfure de sodium, de sulfure de potassium ou de sulfure d'ammonium.

La technique de régénération décrite dans le document US-A-4094777 ne permet pas une restauration suffisante de l'efficacité d'absorption du mercure des masses solides ainsi traitées.

De plus, comme il a été dit précédemment, la méthode de sulfuration à l'aide du sulfure d'hydrogène ($H_2S$) nécessite habituellement de travailler à des températures relativement élevées, parfois supérieures à 200°C; par ailleurs, ce composé est toxique et malodorant, et la durée nécessaire à la sulfuration est habituellement de plusieurs heures et parfois même de plusieurs jours.

L'utilisation de solutions de sulfure, notamment de solutions aqueuses de sulfure, par exemple de solutions aqueuses de sulfure d'ammonium, permet habituellement de travailler à des températures relativement basses, par exemple inférieures à 100°C. Cependant le sulfure d'ammonium est un composé toxique et facilement décomposable, ce qui complique son utilisation .

Il a été découvert, et c'est là l'un des objets de la présente invention, un procédé de régénération de masses solides d'absorption du mercure, permettant d'éviter les inconvénients du procédé du brevet US-A-4094777 et de restaurer de façon significative l'efficacité d'absorption du mercure desdites masses.

Les masses d'absorption régénérées par le procédé de la présente invention, tel que décrit ci-après, retrouvent pratiquement une efficacité d'absorption du mercure très voisine de celles des masses neuves, c'est-à-dire des masses n'ayant pas encore été mises en contact avec un liquide ou un gaz contenant du mercure.

Pour être efficaces dans la captation du mercure contenu dans un gaz ou dans un liquide la masse d'absorption doit contenir du sulfure de cuivre.

La quantité de sulfure de cuivre contenue dans la masse d'absorption, exprimée en cuivre, représente habituellement de 2 à 65%, de préférence d'environ 5 à 50% du poids de la masse; dans une forme souvent avantageuse on utilise des masses contenant une quantité de sulfure de cuivre, exprimée en cuivre, représentant environ 10 à 50% du poids de la masse et parfois environ 20 à 50% de ce poids. On préfère les masses dont au moins 30% et de préférence au moins 80% du cuivre est à l'état de sulfure .

Les masses de captation du mercure, contenant du sulfure de cuivre ont une efficacité de captation qui évolue au cours du temps au fur et à mesure qu'elles captent le mercure contenu dans le fluide au contact duquel elles sont mises.

Ainsi, au cours du temps, l'efficacité de captation diminue et il devient nécessaire, soit d'employer une autre masse solide neuve, soit de régénérer la masse solide dont l'efficacité de captation est devenue insuffisante. Par exemple la régénération est effectuée lorsque l'efficacité de captation n'est plus que de 40 à 99,8% et de préférence 50 à 99,5% de l'efficacité initiale et d'une façon la plus préféréé de 70 à 99% de son efficacité initiale.

Il est en effet nécessaire du point de vue industriel de garder à ces masses une très grande efficacité de captation de mercure de manière à permettre le maintien des spécifications industrielles en teneur de mercure dans le fluide traité. Ces spécifications sont habituellement imposées par les utilisateurs des fluides traités, par exemple par le raffineur dans le cas des hydrocarbures, qui impose le plus souvent des teneurs inférieures à environ 5 à 100 nanogrammes de mercure par mètre cube de fluide.

L'homme du métier est à même de décider à quel moment la masse d'absorption doit être régénérée en fonction des paramètres souhaités sur le site de traitement ou sur le site d'utilisation des fluides traités.

Il est également possible que l'efficacité de la captation diminue notablement et parfois rapidement, par exemple lorsque ces masses sont mises en contact avec une atmosphère oxydante, et que, par exemple, par suite d'une modification involontaire des conditions de contact, une réaction exothermique se déclanche provoquant la dégradation rapide de l'efficacité de captation de ladite masse.

Les masses solides dans lesquelles au moins une partie du cuivre se trouve alors sous forme d'oxydes, perdent, de ce fait, la plus grande partie, voire même la totalité, de leur efficacité de captation sans avoir absorbé de grande quantité de mercure ou même sans avoir absorbé de mercure.

Il est alors nécessaire de régénérer ces masses, ayant une efficacité en démercurisation jugée insuffisante par l'homme du métier.

Le procédé de régénération de la présente invention comprend la mise en contact de la masse d'absorption ayant au moins partiellement perdu son efficacité de captation du mercure, préalablement débarrassée au moins en majeure partie du mercure qu'elle contient, avec au moins un agent de sulfuration, de façon à incorporer au moins partiellement cet agent à ladite masse d'absorption, de préférence au moins en partie dans sa porosité, ledit agent de sulfuration étant un polysulfure organique de formule générale :

$$R\text{-}(S)_n\text{-}R'$$

dans laquelle n représente un nombre entier de 2 à 20, de préférence de 3 à 20, et souvent de 3 à 8 et plus particulièrement de 4 à 7; R et R' représentent chacun un radical organique identique ou différent

renfermant de 1 à 150 atomes de carbone, de préférence de 10 à 60 atomes de carbone, soit encore de 5 à 40 atomes de carbone et plus particulièrement de 7 à 16 atomes de carbone, ces radicaux étant habituellement choisis dans le groupe constitué par les radicaux alkyles saturés ou insaturés, linéaires ou ramifiés ou de type naphténique, les radicaux aryles, les radicaux alkylaryles et les radicaux arylalkyles, ces divers radicaux pouvant comporter au moins un hétéro-atome ; R éventuellement peut également être un atome d'hydrogène.

L'incorporation du polysulfure organique est habituellement effectuée à une température inférieure à 100°C, usuellement d'environ 0 à 50°C et de préférence d'environ 10 à 35°C et par exemple à la température ambiante (usuellement aux environs de 20°C ou 15°C à 25°C). Le polysulfure est habituellement utilisé en solution dans un solvant organique adéquat, qui dépend notamment de sa nature. Ce solvant peut être un éther, un ester, une cétone, un hydrocarbure ou un mélange de deux ou plusieurs de ces composés.

On utilise habituellement un hydrocarbure ou un mélange d'hydrocarbures. On peut citer à titre d'exemple :

- une essence légère bouillant par exemple entre environ 60 et 95°C,
- une essence de type hexane bouillant entre 63 et 68°C environ,
- une essence de type F bouillant entre environ 100 et 160°C et contenant habituellement 10 à 20% d'hydrocarbures aromatiques, par exemple 15%, en volume,
- une essence de type "white spirit" bouillant entre environ 150 et 250°C et renfermant habituellement 14 à 22% d'hydrocarbures aromatiques, par exemple 17%, en volume,
- ou toute coupe hydrocarbonée ou non, équivalente aux essences précédentes.

On peut citer, à titre d'exemple préféré de polysulfure organique, le ditertiododécylpolysulfure (n=5) où R et R′ sont chacun un radical dodécyle.

Ce produit est commercialisé par exemple par la société Elf Aquitaine sous le nom TPS 32, notamment parce qu'il contient 32% poids environ de soufre.

On peut citer également le ditertiononylpolysulfure (n= 5) où R et R′ sont chacun un radical nonyle.

Ce produit est commercialisé par la société Elf Aquitaine sous le nom TPS 37, notamment parce qu'il contient 37% poids environ de soufre ou par la société PENWALT sous le nom de TNPS.

Pour des raisons de procédure, on peut évidemment utiliser ces agents de sulfuration du type polysulfure organique seuls ou en mélange entre eux dans des proportions judicieusement choisies.

La quantité de polysulfure que l'on incorpore à la masse d'absorption est convenablement choisie pour permettre ultérieurement la transformation des composés de cuivre contenus dans ladite masse, au moins en partie, en sulfure de cuivre. La quantité de polysulfure peut facilement être ajustée en fonction de la quantité de sulfure de cuivre que l'on désire obtenir.

Il est habituellement souhaitable de transformer la totalité des composés de cuivre, présents dans la masse d'absorption, en sulfure de cuivre, et donc d'employer une quantité, calculée en atomes de soufre, environ stoechiométrique, par rapport au cuivre, ou à l'ensemble cuivre et argent calculée en atomes de métal, de polysulfure. La quantité de polysulfure organique employée, calculée en atomes de soufre, est avantageusement telle que le rapport atomique soufre sur métaux présents dans la masse soit d'environ 0,7:1 à 1,2:1 et de préférence d'environ 0,8:1 à 1,1:1.

L'étape d'incorporation du polysulfure organique dans la masse d'absorption est de préférence suivie d'un traitement en atmosphère non oxydante, par exemple neutre ou réductrice, et de préférence neutre, sous balayage de gaz , à une température et pendant un temps suffisants pour permettre la formation de sulfure du ou des métaux présents. Ce traitement est habituellement effectué sous courant de gaz inerte, par exemple d'azote, d'argon, d'hélium, de vapeur d'eau ou un mélange de deux ou plusieurs de ces gaz.

Dans une forme préférée de réalisation de ce traitement thermique sous balayage de gaz, on utilise un gaz contenant de la vapeur d'eau et au moins un autre gaz inerte tel que l'azote, l'argon et l'hélium. La quantité de vapeur d'eau dans le mélange de gaz représente alors avantageusement au moins 50% en poids par rapport au poids du mélange. Il est souvent préférable d'employer de la vapeur d'eau seule, non diluée par un autre gaz inerte.

Ainsi dans une forme avantageuse de réalisation de ce traitement, la masse d'absorption contenant le polysulfure organique est traitée sous un courant de gaz contenant de préférence de la vapeur d'eau, à une température d'environ 100 à environ 250°C, de préférence environ 110 à 180°C et souvent d'environ 120 à 150°C, avec une vitesse spatiale horaire (V.V.H.) exprimée en volume de gaz par volume de masse de captation et par heure d'environ 100 à 1000 $h^{-1}$, de préférence d'environ 300 à 5000 $h^{-1}$ et souvent d'environ 500 à 2000 $h^{-1}$. La durée de ce traitement sous balayage de gaz est habituellement d'environ 1/2 heure à environ 24 heures et de préférence d'environ 1/2 heure à environ 10 heures, une durée d'environ 2 heures étant habituellement suffisante.

Une autre forme avantageuse de ce traitement thermique consiste à effectuer une première partie de cette étape sous un courant de gaz inerte ne contenant sensiblement pas de vapeur d'eau (par exemple moins de 5% en poids et de préférence moins de 1% en poids) habituellement choisi dans le groupe formé par l'azote, l'argon, l'hélium et un mélange de deux ou plusieurs de ces gaz, à une température et pendant une durée choisies dans les gammes données ci-avant, puis à effectuer dans une deuxième partie de cette étape un traitement en présence d'un gaz inerte contenant de la vapeur d'eau (habituellement au

moins 25% en poids, et de préférence au moins 50% en poids et parfois avantageusement 100% en poids) dans les conditions mentionnées ci-avant.

Après le traitement sous balayage de gaz, la masse d'absorption peut éventuellement être séchée, de préférence sous courant de gaz inerte, par exemple sous courant d'azote, d'hélium, d'argon ou d'un mélange de ces gaz, puis éventuellement refroidie jusqu'à la température ambiante de préférence en présence du courant de gaz précité, avant d'être à nouveau mise en contact avec le fluide à purifier.

Avant sa mise en contact avec au moins un agent de sulfuration choisi dans le groupe formé par les agents organiques de sulfuration (polysulfures) mentionnés ci-avant, la masse d'absorption est préalablement débarrassée au moins en partie du mercure qu'elle contient par tout moyen bien connu de l'homme du métier. Cette élimination du mercure peut avantageusement être effectuée par un traitement thermique en atmosphère oxydante, par exemple sous courant d'air ou d'un mélange d'oxygène et de gaz inerte contenant par exemple de 1 à 60% en poids d'oxygène. Il est également possible d'utiliser de l'air enrichi en oxygène. Pour des raisons pratiques on utilise avantageusement de l'air.

La température de ce traitement en atmosphère oxydante est habituellement d'environ 300 à 800°C et de préférence d'environ 400 à 600°C. Ce traitement permet de récupérer le mercure et d'obtenir une masse solide d'absorption débarrassée de préférence au moins en majeure partie et très avantageusement en totalité du mercure. Ce traitement a pour conséquence de transformer la masse d'absorption en une masse inactive pour l'absorption du mercure, en particulier par suite de la transformation au moins partielle du cuivre en oxyde de cuivre (CuO) inactif pour la captation du mercure.

La masse inactive obtenue est cependant facilement régénérable par le procédé de la présente invention.

La présente invention a également pour objet un procédé d'élimination du mercure contenu dans un fluide (gaz ou liquide) comprenant :

a/ une première étape dans laquelle une masse de captation, renfermant un support ou dispersant solide choisi de préférence dans le groupe formé par la silice, l'alumine, la silice-alumine, les silicates, les aluminates et les silico-aluminates et du cuivre au moins en partie à l'état de sulfure, est mise en contact dans des conditions de captation du mercure, avec une charge dudit fluide, ledit contact étant poursuivi jusqu'à ce que ladite masse de captation ait perdu, au moins en partie, son efficacité de captation du mercure,

b/ une deuxième étape dans laquelle la masse de captation issue de l'étape (a) est soumise à une régénération, ladite régénération étant effectuée selon le procédé de l'invention décrit ci-avant,

c/ une troisième étape dans laquelle la masse de captation régénérée issue de l'étape (b) est mise en contact avec une nouvelle charge de fluide, dans des conditions de captation du mercure.

Le cycle ainsi décrit comprenant une période de captation du mercure, une période de régénération, puis une nouvelle période de captation du mercure peut être répété plusieurs fois.

Les masses d'absorption sont utilisées de préférence sous forme de lit fixe à travers lequel on fait passer le gaz ou le liquide à purifier.

Il a été constaté que les masses ayant un diamètre moyen de pores au moins égal à environ 100 Angströms ($10^{-8}$ m) présentaient une stabilité accrue en présence de charges contenant des hydrocarbures condensables ($C_4$ ou supérieurs à $C_4$).

Les masses d'absorption sont régénérées selon le procédé de la présente invention de préférence dans une unité spécialement conçue pour effectuer cette régénération. Il est cependant possible d'effectuer la régénération de la masse de captation dans le réacteur utilisé pour le traitement du fluide.

Les exemples suivants illustrent l'invention sans en limiter la portée.

EXEMPLE 1 (comparatif)

On imprègne 1 kg de billes d'alumine de 50 $m^2 \times g^{-1}$ de surface spécifique et de volume poreux 1,2 $cm^3 \times g^{-1}$ par 1,2 l d'une solution aqueuse renfermant 770 g de nitrate de cuivre trihydraté $Cu(NO_3)_2, 3H_2O$.

On sèche et on calcine les billes d'alumines ainsi imprégnées durant 7 heures à 430°C sous un courant d'air à une V.V.H. de 5000 $h^{-1}$. Les billes ainsi obtenues sont dans une second étape imprégnées au drageoir, au moyen de 1 l d'une solution aqueuse à 20% en poids de sulfure d'ammonium. L'excès de soufre est éliminé par séchage à l'étuve à 150°C durant 18 heures sous courant d'azote (V.V.H. de 5000 $h^{-1}$).

La masse A obtenue renferme du sulfure de cuivre en quantité exprimée en poids de cuivre de 20% par rapport au poids de la masse. L'analyse par diffraction X indique que tout le cuivre est sous forme de sulfure de cuivre.

EXEMPLE 2 (comparatif)

On imprègne 1 kg de billes d'alumine de 50 $m^2 \times g^{-1}$ de surface spécifique et de volume poreux 1,2 $cm^3 \times g^{-1}$ par 1,2 l d'une solution aqueuse renfermant 490 g de carbonate de cuivre précipité $2CuCO_3, Cu(OH)_2$.

On sèche et on calcine les billes d'alumines ainsi imprégnées durant 7 heures à 430°C sous un courant d'air à une V.V.H. de 5000 $h^{-1}$. Les billes ainsi obtenues sont dans une second étape imprégnées au drageoir, au moyen de 1 l d'une solution aqueuse à environ 20% en poids de sulfure de sodium. L'excès de soufre est éliminé par séchage à l'étuve à 150°C durant 18 heures sous courant d'azote (V.V.H. de 5000 $h^{-1}$).

La masse B obtenue renferme du sulfure de cuivre en quantité exprimée en poids de cuivre de 20% par rapport au poids de la masse. L'analyse par diffraction X indique que tout le cuivre est sous forme de sulfure de cuivre.

EXEMPLE 3

On imprègne 1 kg de billes d'alumine de 50 $m^2 \times g^{-1}$ de surface spécifique et de volume poreux 1,2 $cm^3 \times g^{-1}$ par 1,2 l d'une solution aqueuse renfermant 770 g de nitrate de cuivre trihydraté. On sèche et on calcine les billes d'alumines ainsi imprégnées durant 7 heures à 430°C sous un courant d'air à une V.V.H. de 5000 $h^{-1}$.

On imprègne au drageoir à une température 20°C les billes calcinées obtenues ci-avant par 0,86 l d'une solution à 30% en poids de ditertiononylpolysulfure (produit commercialisé par la société Elf-Aquitaine sous le nom TPS 37) dans le "White-Spirit". Le volume de solution utilisé correspond au volume d'impregnation de la masse traitée, de sorte que la totalité du polysulfure est absorbé dans la dite masse.

Le produit obtenu est séché à 150°C durant 16 heures sous courant d'azote (V.V.H.=5000 $h^{-1}$); puis durant 2 heures traité (activé) sous vapeur d'eau circulante à une température de 130 à 150°C avec une V.V.H. de 1000 $h^{-1}$.

La masse C obtenue est alors séchée sous azote (VVH= 5000 $h^{-1}$) avant d'être testée en démercurisation.

L'analyse par diffraction X indique que tout le cuivre est sous forme de sulfure de cuivre. La quantité de sulfure de cuivre exprimée en poids de cuivre est de 20% par rapport au poids de la masse.

EXEMPLE 4

On imprègne 1 kg de billes d'alumine de 50 $m^2 \times g^{-1}$ de surface spécifique et de volume poreux 1,2 $cm^3 \times g^{-1}$ par 1,2 l d'une solution aqueuse renfermant 770 g de nitrate de cuivre trihydraté. On sèche et on calcine les billes d'alumines ainsi imprégnées durant 7 heures à 430°C sous un courant d'air à une V.V.H. de 5000 $h^{-1}$.

On imprègne au drageoir à une température 20°C les billes calcinées obtenues ci-avant par 0,90 litre d'une solution à 30% en poids de ditertiododécylpolysulfure (produit commercialisé par la société Elf-Aquitaine sous le nom TPS 32) dans le "White-Spirit". Le volume de solution utilisé correspond au volume d'imprégnation de la masse traitée, de sorte que la totalité du polysulfure est absorbé dans la dite masse.

Le produit obtenu est séché à 150°C durant 16 heures sous courant d'azote (V.V.H.=5000 $h^{-1}$); puis durant 2 heures traité (activé) sous vapeur d'eau circulante à une température de 130 à 150°C avec une V.V.H. de 1000 $h^{-1}$.

La masse D obtenue est alors séchée sous azote (VVH= 5000 $h^{-1}$) avant d'être testée en démercurisation.

L'analyse par diffraction X indique que tout le cuivre est sous forme de sulfure de cuivre. La quantité de sulfure de cuivre exprimée en poids de cuivre est de 20% par rapport au poids de la masse.

EXEMPLE 5

On prépare comme décrit ci-avant dans l'exemple 3 une masse E à partir des mêmes billes d'alumine. Le procédé de préparation est identique en tous points à l'exception du fait que les billes d'alumine sont imprégnées par une solution contenant 760 g de nitrate de cuivre trihydraté et 7 g de nitrate d'argent. L'analyse par diffraction X montre que tout le cuivre et tout l'argent dans la masse E se trouvent sous forme de sulfure.

EXEMPLE 6

On prépare comme décrit dans l'exemple 3 une masse F à partir des mêmes billes d'alumine. Le procédé de préparation est identique en tous points à l'exception du fait que les billes d'alumine sont imprégnées par une solution aqueuse renfermant 490 g de carbonate de cuivre précipité $2CuCO_3$, $Cu(OH)_2$.

L'analyse par diffraction X montre que tout le cuivre est sous forme de sulfure de cuivre. La quantité de sulfure de cuivre exprimée en poids de cuivre est de 20 % par rapport au poids de la masse.

EXEMPLE 7

On prépare comme décrit dans l'exemple 4 une masse G à partir des mêmes billes d'alumine. Le procédé de préparation est identique en tous points à l'exception du fait que les billes d'alumine sont imprégnées par une solution aqueuse renfermant 490 g de carbonate de cuivre précipité $2CuCO_3$, $Cu(OH)_2$.

L'analyse par diffraction X montre que tout le cuivre est sous forme de sulfure de cuivre. La quantité de sulfure de cuivre exprimée en poids de cuivre est de 20 % par rapport au poids de la masse.

EXEMPLE 8

On prépare comme décrit dans l'exemple 3 une masse H à partir des mêmes billes d'alumine. Le procédé de préparation est identique en tous points à l'exception du fait que les billes d'alumine sont imprégnées par une solution contenant 480 g de carbone de cuivre précipité $2CuCO_3$, $Cu(OH)_2$ et 7 g de nitrate d'argent.

L'analyse par diffraction X montre que tout le cuivre et tout l'argent dans la masse H se trouvent sous forme de sulfure.

EXEMPLE 9

Les masses de captation du mercure A à H obtenues dans les exemples précédents sont testées dans les conditions suivantes. L'appareillage consiste en un réacteur tubulaire en métal dont l'inactivité pour la fixation du mercure a été contrôlée. On introduit dans ce réacteur 30 ml de la masse de captation à tester et on fait passer un courant de gaz naturel renfermant du mercure à une température de 70°C, sous une pression de 35 bars (3,5 MPa) à une V.V.H. de 15000 $h^{-1}$ (TPN, température et pression normale) soit un débit de 450 l x $h^{-1}$.

La composition volumique centésimale du gaz naturel à épurer est de 84% en $CH_4$, 0,6% en hydrocarbures ayant 5 atomes de carbone et plus dans leur molécule, le reste étant constitué d'un mélange de $N_2$, $CO_2$, $C_2H_4$, $C_3H_8$ et $C_4H_{10}$. La teneur en mercure dans le gaz à l'entrée du réacteur est de 2 x $10^{-5}$ g/$m^3$ (TPN).

La quantité de mercure subsistant dans les gaz après épuration est évaluée par une méthode utilisant le principe de la variation de résistivité d'un film d'or amalgamé par le mercure.

L'efficacité des masses de captation est définie par la relation:

$$E\% = \frac{(\text{teneur en mercure à l'entrée}) - (\text{teneur en mercure à la sortie}) \times 100}{(\text{teneur en mercure à l'entrée})}$$

L'efficacité dite "initiale" est déterminée après une heure de fonctionnement dans les conditions décrites ci-avant.

Une mesure est ensuite effectuée après 500 heures de fonctionnement dans les conditions décrites ci-avant.

Dans le but de mieux apprécier la durée de vie ou tenue dans le temps des masses de captation, un test de vieillissement accéléré est effectué dans les conditions suivantes :

Après 500 heures de captation du mercure dans les conditions décrites ci-avant, on fait passer sur la masse de captation un gaz de composition identique mais contenant 20 mg/$m^3$ (TPN) de mercure durant 200 heures (ce qui est équivalent à 200000 heures de fonctionnement dans les conditions précitées avec un gaz contenant 2 x $10^{-5}$ g/$m^3$ de mercure). Au bout de ces 200 heures on fait à nouveau passer un gaz contenant $2.10^{-5}$ g/$m^3$ de mercure de composition identique à celle donnée ci-avant et dans les conditions précisées ci-avant, puis on mesure l'efficacité après 1 heure de fonctionnement dans lesdites conditions.

Les résultats sont donnés dans les tableaux 1 et 2 ci-après : ils montrent que les masses C, D, E d'une part et F, G, H d'autre part, obtenues par le procédé de la présente invention possèdent une très bonne efficacité et que de plus leur tenue dans le temps est respectivement supérieure à celle de la masse A et à celle de la masse B (A et B illustrant l'art antérieur) ; l'efficacité de captation à la fin du test de vieillissement accéléré est supérieure pour les masses C, D, E d'une part et F, G, H d'autre part, à celle respectivement de la masse A et de la masse B.

TABLEAU 1

| masse | EFFICACITE % | | |
|---|---|---|---|
| | initiale à 1 h<br>$2 \times 10^{-5}$ g/m$^3$ Hg | à 500 h<br>$2 \times 10^{-5}$ g/m$^3$ Hg | à 200 h<br>$2 \times 10^{-2}$ g/m$^3$ Hg |
| A | 99,9 | 99,9 | 98,3 |
| C | 99,9 | 99,9 | 99,5 |
| D | 99,9 | 99,9 | 99,5 |
| E | 99,9 | 99,9 | 99,6 |

TABLEAU 2

| masse | EFFICACITE % | | |
|---|---|---|---|
| | initiale à 1 h<br>$2 \times 10^{-5}$ g/m$^3$ Hg | à 500 h<br>$2 \times 10^{-5}$ g/m$^3$ Hg | à 200 h<br>$2 \times 10^{-2}$ g/m$^3$ Hg |
| B | 99,8 | 99,8 | 98,2 |
| F | 99,8 | 99,8 | 99,5 |
| G | 99,8 | 99,8 | 99,4 |
| H | 99,8 | 99,8 | 99,6 |

EXEMPLE 10

30 ml de la masse A préparée selon la méthode décrite dans l'exemple 1 sont disposés dans un réacteur en métal, inerte vis-à-vis de la fixation du mercure, dans lequel on fait passer un courant de gaz naturel renfermant du mercure à une température de 70°C sous une pression de 35 bars (3,5 MPa) à une V.V.H. de 15000 $h^{-1}$ (TPN) soit un débit de 450 l/h. La composition volumique centésimale du gaz naturel à épurer est de 84% en $CH_4$, 0,6% en hydrocarbures ayant 5 atomes de carbone et plus dans leur molécule le reste étant constitué d'un mélange de $N_2$, $CO_2$, $C_2H_4$, $C_3H_8$ et $C_4H_{10}$. La teneur en mercure dans le gaz à l'entrée du réacteur est de $2 \times 10^{-5}$ g/m$^3$ (TPN : température et pression normale).

La quantité de mercure subsistant dans le gaz après épuration est évaluée par une méthode utilisant le principe de la variation de résistivité d'un film d'or amalgamé par le mercure.

L'efficacité des masses de captation est définie par la relation :

$$E\% = \frac{(\text{teneur en mercure à l'entrée}) - (\text{teneur en mercure à la sortie}) \times 100}{(\text{teneur en mercure à l'entrée})}$$

L'efficacité dite "initiale" est déterminée après une heure de fonctionnement dans les conditions décrites ci-avant.

La désactivation en fonction du temps est déterminée au moyen d'une mesure après 500 heures de fonctionnement dans les conditions décrites ci-avant. Un test de vieillissement accéléré est également effectué, ensuite, de la manière suivante : après 500 heures de captation dans les conditions décrites ci-avant on fait passer sur la masse un gaz de composition identique mais contenant 20 mg/m$^3$ de mercure durant 200 heures (ce qui est équivalent à 200000 heures de fonctionnement dans les conditions précitées avec un gaz contenant $2 \times 10^{-5}$ g/m$^3$ de mercure).

Au bout de ces 200 heures on fait à nouveau passer un gaz contenant $2 \times 10^{-5}$ g/m$^3$ de mercure, de composition identique à celle donnée ci-avant et dans les conditions précisées ci-avant, puis on mesure l'efficacité après une heure de fonctionnement dans lesdites conditions.

Les résultats sont donnés dans le tableau 3 ci-après. Le mercure ainsi retenu est ensuite éliminé, par chauffage de la masse désactivée à 500°C, sous un courant d'air sec, à un débit de 100 l/h, durant 4 heures . La masse I résultant de ce traitement ne renferme plus ni soufre, ni mercure. Son efficacité pour la captation du mercure est nulle.

EXEMPLE 11

30 ml de la masse A préparée selon la méthode décrite dans l'exemple 1 sont disposés dans un réacteur identique à celui décrit dans l'exemple 10, dans lequel on fait passer un courant d'air sec (pollué par du

mercure) à une température de 70°C, sous une pression de 35 bars (3,5 MPa) à une V.V.H. de 15000 $h^{-1}$. L'air sec à épurer contient 2 x $10^{-5}$ g/$m^3$ de mercure.

Lors de l'opération de captation, après 100 h de fonctionnement, on constate que la masse est le siège d'une réaction exothermique et qu' il se produit un abondant dégagement de $SO_2$. Il s'ensuit une désactivation très importante de la masse de captation. Les résultats obtenus sont donnés en terme d'efficacité après 1 h et après 110 h de fonctionnement dans le tableau 4. Suite à cet incident la captation du mercure contenu dans l'air est arrêtée et la masse désactivée est chauffée à 500°C sous un courant d'air sec à un débit de 100 l/h durant 4 heures. La masse J résultant de ce traitement ne renferme plus de soufre, ni de mercure. Son efficacité pour la captation du mercure est nulle.

EXEMPLE 12 (comparatif)

Une masse I obtenue en suivant le processus décrit dans l'exemple 10 est régénérée selon l'une des méthodes préconisées dans l'art antérieur, au moyen d'un courant d'$H_2S$ (VVH = 10000 $h^{-1}$) durant 5 heures, à 280°C, sous pression atmosphérique.

La masse ainsi régénérée appelée masse K est testée dans les mêmes conditions que celles décrites dans l'exemple 10.

Les résultats obtenus figurent dans le tableau 5 ci-après. Le test est arrêté au bout de 500 heures la masse n'ayant plus une efficacité suffisante du point de vue industriel.

EXEMPLE 13 (comparatif)

Une masse I obtenue en suivant le processus décrit dans l'exemple 10 est régénérée selon un processus identique à celui décrit pour la préparation de la masse A, c'est-à-dire par imprégnation au moyen d'une solution aqueuse de sulfure d'ammonium.

La masse ainsi régénérée appelée masse L est testée dans les mêmes conditions que celles décrites dans l'exemple 10.

Les résultats obtenus figurent dans le tableau 5 ci-après. Le test est arrêté au bout de 500 heures, la masse n'ayant plus une efficacité suffisante du point de vue industriel.

EXEMPLE 14 (comparatif)

Une masse I obtenue en suivant le processus décrit dans l'exemple 10, est régénérée par imprégnation au moyen d'une solution aqueuse à 20 % en poids de sulfure de sodium.

La masse ainsi régénérée appelée masse M est testée dans les mêmes conditions que celles décrites dans l'exemple 10.

Les résultats obtenus figurent dans le tableau 5 ci-après. Le test est arrêté au bout de 500 heures, la masse n'ayant plus une efficacité suffisante du point de vue industriel.

EXEMPLE 15 (comparatif)

Une masse J obtenue selon le processus de l'exemple 11 est régénérée selon la méthode décrite dans l'exemple 12. La masse ainsi régénérée appelée masse N est testée dans les mêmes conditions que celles mentionnées dans l'exemple 11. Le test est poursuivi sans incident pendant 260 heures.

Les résultats obtenus figurent dans le tableau 6 ci-après.

EXEMPLE 16 (comparatif)

Une masse J obtenue selon le processus de l'exemple 11 est régénérée selon la méthode décrite dans l'exemple 13. La masse ainsi régénérée appelée masse O est testée dans les mêmes conditions que celles mentionnées dans l'exemple 11. Le test est poursuivi sans incident pendant 260 heures.

Les résultats sont donnés dans le tableau 6 ci-après.

EXEMPLE 17 (comparatif)

Une masse J obtenue selon le processus de l'exemple 11 est régénérée selon la méthode décrite dans l'exemple 14. La masse ainsi régénérée appelée masse P est testée dans les mêmes conditions que celles mentionnées dans l'exemple 11. Le test est poursuivi sans incident pendant 260 heures.

Les résultats obtenus figurent dans le tableau 6 ci-après.

EXEMPLE 18

100 g d'une masse I (obtenue en suivant le processus décrit dans l'exemple 10), inactive en démercurisation, sont régénérés par imprégnation au drageoir au moyen de 86 ml d'une solution à 30% de ditertiononylpolysulfure (produit commercialisé par la société ELF-AQUITAINE sous le nom de TPS 37) dans le

"White Spirit". Pour que l'ensemble du polysulfure soit adsorbé, on utilise un volume total de réactif (polysulfure + solvant du polysulfure) égal au volume d'imprégnation de la masse traitée. Cette opération, conduite à température ambiante (20°C) est suivie d'un sèchage à 150°C durant 16 heures sous courant d'azote (V.V.H.=5000 $h^{-1}$), puis d'une activation sous vapeur d'eau circulante à 130-150°C durant 2 heures (V.V.H.=1000$h^{-1}$). La masse ainsi activée appelée masse Q, est ensuite sèchée sous azote (V.V.H.=5000 $h^{-1}$) puis testée en démercurisation dans les conditions décrites dans l'exemple 10.

Les résultats sont donnés dans le tableau 5 ci-après.

EXEMPLE 19

100 g d'une masse I (obtenue en suivant le processus décrit dans l'exemple 10), inactive en démercurisation, sont régénérés par imprégnation au drageoir au moyen de 90 ml d'une solution à 30% de ditertiododécylpolysulfure (produit commercialisé par la société ELF-AQUITAINE sous le nom de TPS 32) dans le "White Spirit". Pour que l'ensemble du polysulfure soit adsorbé, on utilise un volume total de réactif (polysulfure + solvant du polysulfure) égal au volume d'imprégnation de la masse traitée. Cette opération, conduite à température ambiante (20°C) est suivie d'un sèchage à 150°C durant 16 heures sous courant d'azote (V.V.H.=5000 $h^{-1}$), puis d'une activation sous vapeur d'eau circulante à 130-150°C durant 2 heures (V.V.H.=1000$h^{-1}$). La masse ainsi activée appelée masse R, est ensuite sèchée sous azote (V.V.H.=5000 $h^{-1}$) puis testée en démercurisation dans les conditions décrites dans l'exemple 10.

Les résultats sont donnés dans le tableau 5 ci-après.

EXEMPLE 20

100 g d'une masse J obtenue selon le processus de l'exemple 11 sont régénérés selon la technique décrite dans l'exemple 18. La masse ainsi régénérée appelée masse S est testée dans les mêmes conditions que celles mentionnées dans l'exemple 11. Le test est poursuivi sans incident pendant 260 heures.

Les résultats figurent dans le tableau 6 ci-après.

EXEMPLE 21

100 g d'une masse J obtenue selon le processus de l'exemple 11 sont régénérés selon la technique décrite dans l'exemple 19. La masse ainsi régénérée appelée masse T est testée dans les mêmes conditions que celles mentionnées dans l'exemple 11. Le test est poursuivi sans incident pendant 260 heures.

Les résultats figurent dans le tableau 6 ci-après.

TABLEAU 3

| masse | EFFICACITE % | | |
|---|---|---|---|
| | initiale à 1 h<br>2 x $10^{-5}$ g/$m^3$ Hg | à 500 h<br>2 x $10^{-5}$ g/$m^3$ Hg | à 200 h<br>2 x $10^{-2}$ g/$m^3$ Hg |
| A | 99,9 | 99,9 | 98,3 |
| I | 0 | – | – |

TABLEAU 4

| masse | EFFICACITE % | |
|---|---|---|
| | initiale à 1 h<br>2 x $10^{-5}$ g/$m^3$ Hg | à 110 h<br>2 x $10^{-5}$ g/$m^3$ Hg |
| A | 99,9 | 45,5 |
| J | 0 | – |

TABLEAU 5

| masse | EFFICACITE % | | |
|---|---|---|---|
| | initiale à 1 h $2 \times 10^{-5}$ g/m$^3$ Hg | à 500 h $2 \times 10^{-5}$ g/m$^3$ Hg | à 200 h $2 \times 10^{-2}$ g/m$^3$ Hg |
| K | 99,1 | 97,3 | – |
| L | 99,3 | 98,7 | – |
| M | 99,2 | 98,4 | – |
| Q | 99,8 | 99,8 | 98,2 |
| R | 99,7 | 99,7 | 98,2 |

TABLEAU 6

| masse | EFFICACITE % | |
|---|---|---|
| | initiale à 1 h $2 \times 10^{-5}$ g/m$^3$ Hg | à 260 h $2 \times 10^{-5}$ g/m$^3$ Hg |
| N | 98,3 | 97,5 |
| O | 98,5 | 98,0 |
| P | 98,5 | 97,8 |
| S | 99,7 | 99,7 |
| T | 99,7 | 99,7 |

La comparaison des résultats donnés dans les tableaux 5 et 6 montre que les masses Q, R, S et T obtenues après régénération selon la présente invention ont retrouvé une efficacité presque identique à celle de la masse neuve (masse A).

De plus, l'efficacité des masses K, L et M obtenues par régénération de la masse I selon les méthodes de l'art antérieur est inférieure à celle des masses Q et R obtenues par régénération de la masse I selon la présente invention. Il en est de même de l'efficacité des masses N, O et P régénérées à partir de la masse J selon les techniques de l'art antérieur, que est inférieure à celle des masses E et F obtenues par régénération de la masse J selon la présente invention. En outre au bout de 500 heures de fonctionnement, les masses K, L et M n présentent plus une efficacité suffisante du point de vue industriel alors que l'efficacité des masses Q et R est inchangée par rapport à leur efficacité initiale.

L'efficacité des masses N, O et P au bout de 260 heures est devenue insuffisante du point de vue industriel alors que l'efficacité des masses S et T est inchangée par rapport à leur efficacité initiale.

## Revendications

**1.-** Procédé de préparation d'une masse solide de captation du mercure comprenant un support ou dispersant minéral solide et du cuivre au moins en partie sous forme de sulfure, caractérisé en ce qu'il comporte les étapes suivantes :

a/ on incorpore au moins un composé de cuivre, autre qu'un sulfure, à un support ou dispersant minéral solide,

b/ on calcine éventuellement, le produit obtenu à l'étape (a) de manière à transformer au moins en partie le ou les composés de cuivre qu'il contient en oxyde de cuivre,

c/ on incorpore au moins un polysulfure organique de formule $R\text{-}S_{(n)}\text{-}R'$ dans laquelle n représente un nombre entier de 2 à 20, R représente un atome d'hydrogène ou un radical organique renfermant de 1 à 150 atomes de carbone, choisi dans le groupe formé par les radicaux alkyles saturés ou insaturés, linéaires ou ramifiés ou de type naphténique, les radicaux aryles, les radicaux alkylaryles et les radicaux arylalkyles, et R' représente un radical organique identique ou différent de R renfermant de 1 à 150 atomes de carbone choisi dans le groupe des radicaux organiques défini pour R, au produit résultant de l'étape (b) ou de l'étape (a), et

d/ on soumet le produit résultant de l'étape (c), appelé précurseur, à un traitement thermique, en atmosphère non oxydante, sous balayage de gaz, à une température et pendant un temps suffisants pour permettre la formation de sulfure du ou des métaux présents.

**2.-** Procédé selon la revendication 1 dans lequel le support ou dispersant minéral solide est choisi dans le groupe formé par le charbon, le charbon actif, le coke, la silice, les alumines, les silices-alumines, les silicates, les aluminates et les silico-aluminates.

**3.-** Procédé selon la revendication 1 ou 2 dans lequel on utilise au cours de l'étape (a) une solution aqueuse de nitrate de cuivre.

**4.**- Procédé selon l'une des revendications 1 à 3 dans lequel au cours de l'étape (b) le produit résultant de l'étape (a) est calciné à une température de 200 à 1000°C, sous un courant de gaz ayant une V.V.H. d'environ 0 à environ 20000 $h^{-1}$, pendant environ 0,5 à environ 24 heures.

**5.**- Procédé selon l'une des revendications 1 à 4 dans lequel au cours de l'étape (c) le polysulfure organique est incorporé au produit résultant de l'étape (b) ou de l'étape (a) à une température inférieure à environ 100°C.

**6.**- Procédé selon l'une des revendications 1 à 5 dans lequel au cours de l'étape (c) le polysulfure organique est utilisé en solution dans un solvant organique de préférence choisi dans le group formé par une essence légère bouillant entre environ 60 et 95°C, une essence de type hexane bouillant entre environ 63 et 68°C, une essence dite de type F bouillant entre environ 100 et 160°C (et renfermant en volume 10 à 20% d'hydrocarbures aromatiques) et une essence du type "White Spirit" bouillant entre environ 150 et 250°C (et renfermant en volume 14 à 22% d'hydrocarbures aromatiques).

**7.**- Procédé selon l'une des revendications 1 à 6 dans lequel le polysulfure organique est choisi dans le groupe formé par le ditertiododécylpolysulfure et le ditertiononylpolysulfure.

**8.**- Procédé selon l'une des revendications 1 à 7 dans lequel on utilise une quantité de polysulfure organique calculée en atomes de soufre telle que le rapport atomique soufre sur métaux présents dans la masse soit d'environ 0,7:1 à 1,2:1.

**9.**- Procédé selon l'une des revendications 1 à 8 dans lequel on incorpore en outre au cours de l'étape (a) un composé d'argent.

**10.**- Procédé selon l'une des revendications 1 à 9 dans lequel la proportion de sulfure de cuivre de la masse solide de captation, calculée en cuivre, représente environ 2 à 65% en poids du poids de ladite masse.

**11.**- Procédé d'élimination du mercure présent dans un fluide, dans lequel ledit fluide est mis en contact avec une masse solide de captation obtenue selon le procédé de l'une des revendications 1 à 10, ladite masse étant utilisée en lit fixe.

**12.**- Procédé de préparation d'un précurseur d'une masse solide de captation du mercure selon l'une des revendications 1 à 8 résultant de l'incorporation du polysulfure organique au support ou dispersant minéral solide.

**13.**- Procédé de régénération d'une masse de captation du mercure renfermant :
a) un support ou dispersant solide, et
b) du cuivre au moins en partie à l'état de sulfure, caractérisé en ce qu'il comprend :
- une première étape dans laquelle, ladite masse, ayant au moins partiellement perdu son efficacité de captation du mercure, est débarrassée au moins en partie du mercure qu'elle contient,
- une deuxième étape dans laquelle la masse issue de la première étape est mise en contact avec un agent de sulfuration de façon à incorporer au moins partiellement ledit agent à ladite masse de captation, ledit agent de sulfuration étant un polysulfure organique de formule $R - S_{(n)}-R'$ dans lequel n représente un nombre entier de 2 à 20, R représente un atome d'hydrogène ou un radical organique renfermant de 1 à 150 atomes de carbone, choisi dans le groupe formé par les radicaux alkyles saturés ou insaturés, linéaires ou ramifiés ou de type naphténique, les radicaux aryles, les radicaux alkylaryles et les radicaux arylalkyles et R' représente un radical organique identique ou différent de R, ayant de 1 à 150 atomes de carbone choisi dans le groupe des radicaux organiques défini pour R,
- et une troisième étape dans laquelle la masse issue de la deuxième étape est soumise à un traitement thermique en atmosphère non oxydante sous balayage de gaz à une température et pendant un temps suffisants pour permettre la formation de sulfure du ou des métaux présents.

**14.**- Procédé selon la revendication 13 dans lequel, au cours de la troisième étape, le traitement thermique est effectué sous balayage d'un gaz inerte choisi dans le groupe formé par l'azote, l'argon, l'hélium, la vapeur d'eau et les mélanges de deux ou plusieurs de ces gaz.

**15.**- Procédé selon la revendication 13 ou 14 dans lequel au cours de la troisième étape le traitement thermique est effectué à une température d'environ 100 à 250°C, avec une vitesse spatiale horaire du gaz exprimée en volume de gaz par volume de masse de captation et par heure d'environ 100 à 10000 $h^{-1}$ et durant environ 1/2 heure 24 heures.

**16.**- Procédé selon l'une des revendications 13 à 15 dans lequel, au cours de la première étape, la masse de captation est débarrassée du mercure qu'elle contient par un traitement thermique en atmosphère oxydante à une température d'environ 300 à 800 °C.

**17.**- Procédé selon l'une des revendications 13 à 16 dans lequel la deuxième étape de mise en contact avec un agent de sulfuration est effectuée à une température inférieure à 100°C.

**18.**- Procédé selon l'une des revendications 13 à 17 dans lequel l'agent de sulfuration est employé en solution dans un solvant organique.

**19.**- Procédé selon l'une des revendications 13 à 18 dans lequel le solvant dans lequel est dissous l'agent de sulfuration est au moins un des solvants du groupe formé par une essence légère bouillant entre environ 60 et 95°C, une essence de type hexane bouillant entre environ 63 et 68°C, une essence dite de type F bouillant entre environ 100 et 160°C (et renfermant en volume 10 à 20% d'hydrocarbures aromatiques) et une essence du type "white spirit" bouillant entre environ 150 et 250°C (et renfermant en volume 14 à 22% d'hydrocarbures aromatiques).

**20.-** Procédé selon l'une des revendications 13 à 19 dans lequel le polysulfure organique est choisi dans le groupe formé par le ditertiododécylpolysulfure et le ditertiononylpolysulfure.

**21.-** Procédé selon l'une des revendications 13 à 20 dans lequel on utilise une quantité de polysulfure organique calculée en atome de soufre telle que le rapport atomique soufre sur métaux présents dans la masse soit d'environ 0,7:1 à 1,2:1.

**22.-** Procédé d'élimination du mercure présent dans un fluide comprenant :

a) une première étape dans laquelle une masse de captation renfermant (alpha) un support ou dispersant solide et (bêta) du cuivre au moins en partie à l'état de sulfure, est mise en contact avec une charge dudit fluide, dans des conditions de captation du mercure, ledit contact étant poursuivi jusqu'à ce que ladite masse de captation ait au moins en partie perdue son efficacité de captation du mercure,

b) une deuxième étape dans laquelle la masse de captation du mercure issue de la première étape est soumise à une régénération, ladite régénération étant effectuée selon le procédé de l'une des revendications 13 à 21, et

c) une troisième étape dans laquelle la masse de captation régénérée issue de la deuxième étape est renvoyée à la première étape d'élimination du mercure contenu dans un fluide par mise en contact d'une charge dudit fluide avec ladite masse.

## Patentansprüche

1. Verfahren zur Herstellung einer festen Quecksilber-Adsorptionsmasse, die ein festes mineralisches Träger- oder Dispergiermittel und Kupfer zumindest teilweise in Form von Sulfid enthält, dadurch gekennzeichnet, daß es folgende Verfahrensstufen umfaßt:

a) mindestens eine Kupferverbindung, bei der es sich nicht um ein Sulfid handelt, wird einem festen mineralischen Träger- oder Dispergiermittel einverleibt,

b) gegebenenfalls wird das in Stufe (a) erhaltene Produkt in solcher Weise kalziniert, daß mindestens teilweise die Kupferverbindung oder Kupferverbindungen, die es enthält, in Kupferoxid überführt werden,

c) mindestens ein organisches Polysulfid der Formel $R{-}S_{(n)}{-}R'$, worin n eine ganze Zahl von 2 bis 20 bedeutet, R ein Wasserstoffatom oder einen organischen Rest mit 1 bis 150 Kohlenstoffatomen darstellt, ausgewählt aus der Gruppe, die gebildet wird durch die gesättgten oder ungesättigten, linearen oder verzweigten oder dem Naphthentyp zugehörigen Alkylreste, die Arylreste, die Alkylarylreste und die Arylalkylreste, und R' einen mit R identischen oder davon verschiedenen organischen Rest mit 1 bis 150 Kohlenstoffatomen, ausgewählt aus der für R definierten Gruppe von organischen Resten, bedeutet, dem aus der Stufe (b) oder der Stufe (a) resultierenden Produkt einverleibt wird, und

d) das aus der Stufe (c) resultierende, als Vorläuferverbindung bezeichnete Produkt einer thermischen Behandlung in nicht-oxidierender Atmosphäre unter Einleiten von Gas bei einer Temperatur und während einer Zeitspanne, die ausreichen, um die Bildung von Sulfid des oder der vorliegenden Metalle zu ermöglichen, unterworfen wird.

2. Verfahren nach Anspruch 1, bei dem das feste mineralische Träger- oder Dispergiermittel ausgewählt ist aus der Gruppe, die gebildet wird durch Kohlenstoff, Aktivkohle, Koks, Kieselerde, Tonerden, Kieselerden-Tonerden, Silikate, Aluminate und Silico-Aluminate.

3. Verfahren nach Anspruch 1 oder 2, bei dem im Laufe der Stufe (a) eine wässrige Lösung von Kupfernitrat verwendet wird.

4. Verfahren nach einem der Ansprüche 1 bis 3, bei dem im Laufe der Stufe (b) das aus Stufe (a) resultierende Produkt bei einer Temperatur von 200 bis 1000°C unter einem Gasstrom mit einer V.V.H. von etwa 0 bis etwa 20 000 $h^{-1}$ während etwa 0,5 bis etwa 24 h kalziniert wird.

5. Verfahren nach einem der Ansprüche 1 bis 4, bei dem im Laufe der Stufe (c) das organische Polysulfid dem aus der Stufe (b) oder der Stufe (a) resultierenden Produkt bei einer Temperatur von unter etwa 100°C einverleibt wird.

6. Verfahren nach einem der Ansprüche 1 bis 5, bei dem im Laufe der Stufe (c) das organische Polysulfid in Lösung in einem organischen Lösungsmittel angewandt wird, das vorzugsweise ausgewählt ist aus der Gruppe, die gebildet wird durch eine leichte Benzinfraktion, die zwischen etwa 60 bis 95°C siedet, eine Fraktion vom Typ Hexan, die zwischen etwa 63 und 68°C siedet, eine als Typ F bezeichnete Fraktion, die zwischen etwa 100 und 160°C siedet (und 10 bis 20 Volumenprozent aromatische Kohlenwasserstoffe enthält) und eine Fraktion vom Typ "White Spirit", die zwischen etwa 150 und 250°C siedet (und 14 bis 22 Volumenprozent aromatische Kohlenwasserstoffe enthält).

7. Verfahren nach einem der Ansprüche 1 bis 6, bei dem das organische Polysulfid ausgewählt ist aus der Gruppe, die gebildet wird durch Di-tert-dodecylpolysulfid und Di-tert-nonylpolysulfid.

8. Verfahren nach einem der Ansprüche 1 bis 7, bei dem eine solche Menge an organischem Polysulfid, berechnet als Schwefelatome, angewandt wird, daß das Atomverhältnis Schwefel zu in der Masse vorliegenden Metallen etwa 0,7:1 bis 1,2:1 beträgt.

9. Verfahren nach einem der Ansprüche 1 bis 8, bei dem im Laufe der Stufe (a) ferner eine Silberverbindung einverleibt wird.

10. Verfahren nach einem der Ansprüche 1 bis 9, bei dem die Menge an Kupfersulfid der festen Adsorptionmasse, berechnet als Kupfer, etwa 2 bis 65 Gew.-% des Gewichts der Masse ausmacht.

11. Verfahren zur Beseitigung von in einem Fluidum vorliegendem Quecksilber, bei dem das Fluidum mit einer festen Adsorptionsmasse, die nach dem Verfahren eines der Ansprüche 1 bis 10 erhalten wurde, kontaktiert wird, wobei die Masse als Festbett eingesetzt wird.

12. Verfahren zur Herstellung einer Vorläuferverbindung einer festen Quecksilber-Adsorptionsmasse nach einem der Ansprüche 1 bis 8, die aus der Einverleibung von organischem Polysulfid in das feste mineralische Träger- oder Dispergiermittel resultiert.

13. Verfahren zur Regeneration einer Quecksilber-Adsorptionsmasse enthaltend:

a) ein festes Träger- oder Dispergiermittel und

b) Kupfer zumindest teilweise in Form von Sulfid, dadurch gekennzeichnet, daß es umfaßt:

– eine erste Verfahrensstufe, in der die Masse, die ihre Wirksamkeit zur Adsorption von Quecksilber zumindest teilweise verloren hat, zumindest teilweise von Quecksilber, das sie enthält, befreit wird,

– eine zweite Verfahrensstufe, in der die aus der ersten Stufen stammende Masse mit einem Sulfurierungsmittel in solcher Weise kontaktiert wird, daß dieses Mittel mindestens teilweise der Adsorptionsmasse einverleibt wird, wobei das Sulfurierungsmittel ein organisches Polysulfid der Formel $R - S_{(n)} - R'$ ist, worin n eine ganze Zahl von 2 bis 20 bedeutet, R ein Wasserstoffatom oder einen organischen Rest mit 1 bis 150 Kohlenstoffatomen darstellt, ausgewählt aus der Gruppe, die gebildet wird durch die gesättigten oder ungesättigten, linearen oder verzweigten oder dem Naphthentyp zugehörigen Alkylreste, die Arylreste, die Alkylarylreste und die Arylalkylreste, und R' einen mit R identischen oder davon verschiedenen organischen Rest mit 1 bis 150 Kohlenstoffatomen, ausgewählt aus der für R definierten Gruppe von organischen Resten, bedeutet,

– und eine dritte Verfahrensstufe, in der die aus der zweiten Stufe stammende Masse einer thermischen Behandlung in nicht-oxidierender Atmosphäre unter Einleiten von Gas bei einer Temperatur und während einer Zeitspanne, die ausreichen, um die Bildung von Sulfid des oder der vorliegenden Metalle zu ermöglichen, unterworfen wird.

14. Verfahren nach Anspruch 13, bei dem im Laufe der dritten Stufe die thermische Behandlung unter Einleiten eines inerten Gases, ausgewählt aus der Gruppe, die gebildet wird durch Stickstoff, Argon, Helium, Wasserdampf und die Gemische von zwei oder mehreren dieser Gase, durchgeführt wird.

15. Verfahren nach Anspruch 13 oder 14, bei dem im Laufe der dritten Stufe die thermische Behandlung bei einer Temperatur von etwa 100 bis 250°C mit einer stündlichen Raumgeschwindigkeit des Gases, ausgedrückt in Gasvolumen pro Volumen Adsorptionsmasse und pro Stunde, von etwa 100 bis 10 000 $h^{-1}$ und während etwa 1/2 h bis 24 h durchgeführt wird.

16. Verfahren nach einem der Ansprüche 13 bis 15, bei dem im Laufe der ersten Stufe die Adsorptionsmasse von Quecksilber, das sie enthält, durch eine thermische Behandlung in oxidierender Atmosphäre bei einer Temperatur von etwa 300 bis 800°C befreit wird.

17. Verfahren nach einem der Ansprüche 13 bis 16, bei dem die zweite Stufe der Kontaktierung mit einem Sulfurierungsmittel bei einer Temperatur von unter 100°C durchgeführt wird.

18. Verfahren nach einem der Ansprüche 13 bis 17, bei dem das Sulfurierungsmittel in Lösung in einem organischen Lösungsmittel angewandt wird.

19. Verfahren nach einem der Ansprüche 13 bis 18, bei dem das Lösungsmittel, in dem das Sulfurierungsmittel gelöst wird, mindestens eines der Lösungsmittel aus der Gruppe ist, die gebildet wird durch eine leichte Benzinfraktion, die zwischen etwa 60 und 95°C siedet, eine Fraktion vom Typ Hexan, die zwischen etwa 63 und 68°C siedet, eine als Typ F bezeichnete Fraktion, die zwischen etwa 100 und 160°C siedet (und 10 bis 20 Volumenprozent aromatische Kohlenwasserstoffe enthält) und eine Fraktion vom Typ "White Spirit", die zwischen etwa 150 und 250°C siedet (und 14 bis 22 Volumenprozent aromatische Kohlenwasserstoffe enthält).

20. Verfahren nach einem der Ansprüche 13 bis 19, bei dem das organische Polysulfid ausgewählt ist aus der Gruppe, die gebildet wird durch Di-tert-dodecylpolysulfid und Di-tert-nonylpolysulfid.

21. Verfahren nach einem der Ansprüche 13 bis 20, bei dem eine solche Menge an organischem Polysulfid, berechnet als Schwefelatom, verwendet wird, daß das Atomverhältnis Schwefel zu in der Masse vorliegenden Metallen etwa 0,7:1 bis 1,2:1 beträgt.

22. Verfahren zur Beseitigung von in einem Fluidum vorliegendem Quecksilber, das umfaßt:

a) eine erste Verfahrensstufe, in der eine Adsorptionsmasse, die (alpha) ein festes Träger- oder Dispergiermittel und (beta) Kupfer zumindest teilweise in Form von Sulfid enthält, mit einer Charge dieses Fluidums unter Bedingungen zur Adsorption von Quecksilber kontaktiert wird, wobei dieser Kontakt so lange fortgesetzt wird, bis die Adsorptionsmasse zumindest teilweise ihre Wirksamkeit zur Adsorption von Quecksilber verloren hat,

b) eine zweite Verfahrensstufe, in der die aus der ersten Stufe stammende Quecksilber-Adsorptionsmasse einer Regeneration unterworfen wird, wobei diese Regeneration nach dem Verfahren eines der Ansprüche 13 bis 21 bewirkt wird, und

c) eine dritte Verfahrensstufe, in der die aus der zweiten Stufe stammende regenerierte Adsorptionsmasse zurückgeführt wird zur ersten Stufe der Eliminierung von in einem Fluidum enthaltenem Quecksilber durch Kontaktieren einer Charge dieses Fluidums mit dieser Masse.

## Claims

1. A process for preparing a mercury recovery solid mass containing a solid inorganic carrier or dispersing agent and copper, at least partly as sulfide, characterized in that it comprises the following steps of:
a) incorporating at least one copper compound other than a sulfide with a solid inorganic carrier or dispersing agent,
b) optionally roasting the product obtained in step (a) so as to convert at least partly the one or more copper compounds contained therein to copper oxide,
c) incorporating with the resultant product from step (b) or from step (a) at least one organic polysulfide of formula R – S(n)– R′, wherein n is an integer from 2 to 20, R is a hydrogen atom or an organic radical containing 1–150 carbon atoms, selected from the group formed of saturated or unsaturated, linear or branched alkyl radicals, or radicals of naphthenic type, aryl radicals, alkylaryl and arylalkyl radicals, and R′ is an organic radical, identical to or different from R, having 1–150 carbon atoms, selected from the group of the organic radicals defined for R, and
d) subjecting the resultant product from step (c), called precursor, to a thermal treatment in non-oxidizing atmosphere, under gas scavenging, at a sufficient temperature and for a sufficient time to form the sulfide of the one or more present metal(s).

2. A process according to claim 1 wherein the solid inorganic carrier or dispersing agent is selected from the group formed of coal, active carbon, coke, silica, aluminas, silica-aluminas, silicates, aluminates and silico-aluminates.

3. A process according to claim 1 or 2, wherein, during step (a), an aqueous solution of copper nitrate is used.

4. A process according to one of claims 1 to 3, wherein, during step (b), the product resulting from step (a) is roasted at a temperature from 200 to 1000°C, under a gas stream at a VVH from about 0 to about 20 000 $h^{-1}$, for about 0.5 to about 24 hours.

5. A process according to one of claims 1 to 4, wherein, during step (c), the organic polysulfide is incorporated with the product resulting from step (b) or from step (a), at a temperature lower than about 100°C.

6. A process according to one of claims 1 to 5, wherein, during step (c), the organic polysulfide is used as solution in an organic solvent preferably selected from the group formed of a light gasoline boiling in the range of about 60 to 95°C, a gasoline of hexane type boiling in the range of about 63 to 68°C, a so-called F type gasoline boiling in the range of about 100 to 160°C (and containing 10 to 20% by volume of aromatic hydrocarbons) and a gasoline of "White Spirit" type, boiling in the range of about 100 to 250°C (and containing 14 to 22% by volume of aromatic hydrocarbons).

7. A process according to one of claims 1 to 6, wherein the organic polysulfide is selected from the group formed of ditert-dodecylpolysulfide and ditert-nonylpolysulfide.

8. A process according to one of claims 1 to 7, wherein the organic polysulfide is used in such an amount, calculated as sulfur atoms, that the atomic ratio of sulfur to the metals present in the mass be about from 0.7:1 to 1.2:1.

9. A process according to one of claims 1 to 8 further comprising the incorporation during step (a) of a silver compound.

10. A process according to one of claims 1 to 9 wherein the copper sulfide content of the collecting solid mass, calculated as copper, amounts to about 2 to 65% by weight of said mass.

11. A process for removing mercury from a fluid, comprising contacting said fluid with a collecting solid mass obtained by the process according to one of claims 1 to 10, said mass being used as fixed bed.

12. A process for preparing a precursor of mercury collecting solid mass, according to one of claims 1 to 8 by incorporation of organic polysulfide to the solid inorganic carrier or dispersing agent.

13. A process for regenerating a mercury collecting mass containing (a) a solid carrier or dispersing agent, and (b) copper, at least partly as sulfide, characterized in that it comprises:
– a first step wherein said mass, whose mercury collecting efficiency has been at least partially lost, is freed of at least a part of its mercury content,
– a second step wherein the mass obtained in the first step is contacted with a sulfurizing agent so as to at least partially incorporate said agent with said collecting mass, said sulfurization agent being an organic polysulfide of formula R – $S_{(n)}$– R′ wherein n is an integer from 2 to 20, R is a hydrogen atom or an organic radical containing 1 to 150 carbon atoms, selected from the group formed of saturated or unsaturated, linear or branched alkyl radicals, radicals of naphthenic type, aryl radicals, alkylaryl and arylalkyl radicals, and R′ is an organic radical, identical to or different from R, having from 1 to 150 carbon atoms and selected from the group of organic radicals previously defined for R, and
– a third step wherein the mass obtained in the second step is subjected to a thermal treatment in non-oxidizing atmosphere under gas scavenging at a sufficient temperature and for a sufficient time to form the sulfide of the one or more involved metals.

14. A process according to claim 13, wherein, during the third step, the thermal treatment is performed under scavenging with an inert gas selected from the group formed of nitrogen, argon, helium, steam or mixtures of two or more of these gases.

15. A process according to claim 13 or 14, wherein, during the third step, the thermal treatment is conducted at a temperature of about 100 to 250°C, with a gas hourly space velocity, expressed as gas volume per volume of collecting mass and per hour, from about 100 to 10 000 $h^{-1}$ and for about 1/2 hour to 24 hours.

16. A process according to one of claims 13 to 15, wherein, during the first step, the collecting mass is freed from its mercury content by thermal treatment in oxidizing atmosphere at a temperature of about 300 to 800°C.

17. A process according to one of claims 13 to 16, wherein the second step of contact with a sulfurizing agent is conducted at a temperature lower than 100°C.

18. A process according to one of claims 13 to 17, wherein the sulfurization agent is used as solution in an organic solvent.

19. A process according to one of claims 13 to 18, wherein the solvent used to dissolve the sulfurization agent is at least one of the solvents from the group formed by a light gasoline boiling in the range of about 60 to 95°C, a gasoline of hexane type boiling in the range of about 63 to 68°C, a gasoline of F type boiling in the range of about 100 to 160°C (and containing 10 to 20% by volume of aromatic hydrocarbons) and a gasoline of "White Spirit" type boiling in the range of about 150 to 250°C (and containing 14 to 22% by volume of aromatic hydrocarbons).

20. A process according to one of claims 13 to 19, wherein the organic polysulfide is selected from the group formed of ditert-dodecylpolysulfide and ditert-nonylpolysulfide.

21. A process according to one of claims 13 to 20, wherein the organic polysulfide is used in such an amount, calculated as sulfur atoms, that the atomic ratio of sulfur to the metals present in the mass be of from about 0.7:1 to 1.2:1.

22. A process for removing mercury from a mercury-containing fluid, comprising the following successive steps:

a) a first step wherein a collecting mass which contains (α) a solid carrier or dispersing agent and (β) copper at least partly as sulfide, is contacted with a charge of said fluid, in mercury collecting conditions, said contact being maintained until said collecting mass has lost at least a part of its mercury collecting efficiency,

b) a second step wherein said mercury collecting mass obtained at the end of the first step is subjected to a regeneration, said regeneration being performed by the process according to one of claims 13 to 21, and

c) a third step wherein the regenerated collecting mass obtained at the end of the second step is fed back to the first step of removing mercury contained in a fluid by contacting a charge of said fluid with said mass.